# EUROPÄISCHE PATENTSCHRIFT

(11) **EP 0 381 854 B1**
(45) Veröffentlichungstag und Bekanntmachung des Hinweises auf die Patenterteilung: **28.09.1994**
(21) Anmeldenummer: 89123775.2
(22) Anmeldetag: 22.12.1989
(51) Int. Cl.: A01K 13/00, A46B 5/00

(54) **Striegel**
Curry-comb
Etrille

(30) Priorität: 27.12.1988 DE 8816104 U
(43) Veröffentlichungstag der Anmeldung: 16.08.1990
(73) Patentinhaber: Schmitz, Winfried, D-47559 Kranenburg (DE)
(72) Erfinder: Schmitz, Winfried, D-47559 Kranenburg (DE)

(56) Entgegenhaltungen:
- CH-A- 213 869
- CH-A- 273 638
- DE-U- 8 701 823
- FR-A- 2 614 758
- US-A- 4 044 724

## Beschreibung

Die bekannten Pferdestriegel bestehen aus einer starren Platte aus Holz, an deren Unterseite eine Auflage mit Noppen vorgesehen ist, die als Bürste wirkt. An der Platte ist ein Gurt angeordnet, der die Oberseite der Platte mit einem solchen Abstand umgibt, daß der Benutzer des Striegels mit seiner Hand zwischen Platte und Gurt derart greifen kann, daß die Handinnenfläche gegen die Platte und der Handrücken gegen den Gurt anliegt. Dadurch hat der Benutzer des Striegels letzteren fest in der Hand. Diese bekannten Striegel sind zum Striegeln größerer Haustiere, insbesondere Pferde gut geeignet. Dabei stört es nicht, daß der Striegel unelastisch ist, denn die Körperkonturen eines Pferdes lassen das Striegeln mit einem unelastischen Striegel ohne weiteres zu. Für kleinere Haustiere, wie insbesondere Katzen und Hunde ist der bekannte Pferdestriegel nicht geeignet, da er hart und unelastisch ist und sich somit den Körperkonturen von Katzen und Hunden nicht anpassen kann.

Aus FR-A-26 14 758 ist bereits eine Bürste zur Anpassung an die Form von Tierkörpern bekannt. Sie besteht aus zwei biegsamen, relativ dünnen Trägerplatten, welche den Handrücken bzw. die Handinnenfläche bedecken und an den Seitenrändern durch je einen Verbindungsstreifen aus einem elastischen Material verbunden sind. Die der Handinnenfläche zugehörige Trägerplatte ist auf der Außenfläche mit einem Schleifgewebe versehen, dessen Körnung entsprechend der gewünschten Wirkung, z. B. Abkratzen, Bürsten, Glattstriegeln usw. ausgewählt werden kann. Die andere Trägerplatte kann zur Verteilung von Flüssigkeiten oder Puder mit einem Filz belegt sein. Diese bekannte Bürste ist sehr aufwendig und umständlich ausgebildet und für eine häufige Benutzung weniger geeignet. Das körnige Schleifgewebe gestattet allenfalls das Abkratzen von festem Schmutz u. dgl., nicht aber das Entfernen loser Haare und anderer faseriger Schmutzteilchen o. dgl. aus dem Fell. Für eine schonende Fellpflege ist die vorbekannte Bürste hicht geeignet.

Demgegenüber sieht die Erfindung einen Striegel gemäß Anspruchs 1 vor.

Ein solcher Striegel zeichnet sich neben einer guten Anpassungsfähigkeit an die Körperkonturen von Hunden und Katzen durch eine schonende Fellpflege mit einer besonders guten Reinigungswirkung aus, wobei insbesondere auch lose Tierhaare und andere Schmutzteilchen vom Fell entfernt werden. Die an sich bekannte Ausbildung von Bürstenvelours bewirkt, daß die losen Tierhaare und Schmutzteilchen festgehalten werden, wenn der Striegel in Bürstrichtung bewegt wird. Die festgehaltenen Tierhaare und Schmutzteilchen lassen sich vom Bürstenvelours von Hand entgegen der Bürstrichtung abstreifen. Weiterhin hat der Striegel einen einfachen Aufbau, der eine preiswerte Fertigung und eine häufige Benutzung erlaubt. Die Verwendung einer etwa 6 bis 10 mm dicken Trägerplatte für den Bürstenvelours ergibt eine gute Handlichkeit des Striegels, erleichtert aber auch das Entfernen der festgehaltenen Tierhaare und Schmutzteilchen vom Bürstenvelours.

Zweckmäßig besteht die Platte aus einem Schaumstoff, insbesondere aus Moosschaum. Sie kann auch aus Filz oder Gummi bestehen.

Der Bürstenvelours ist zweckmäßig mit der Platte an deren Unterseite verklebt oder verschweißt, so daß eine feste Verbindung zwischen dem Bürstenvelours und der Platte gewährleistet ist.

Des weiteren empfiehlt es sich, daß der Gurt an den beiden Längsseiten der Platte zwischen dieser und dem Bürstenvelours eingelassen und verklebt, verschweißt, genäht oder genietet ist. Hierdurch ist eine zuverlässige Befestigung des Gurtes zwischen der Platte und dem Bürstenvelours gewährleistet.

Der Gurt kann aus Leinen, Baumwolle, Klettenband oder Gummi bestehen.

Der vorstehend beschriebene Striegel ist nicht nur zum Striegeln von kleineren Haustieren geeignet, vielmehr ist es darüberhinaus ohne weiteres möglich, mit dem Striegel Polster und Garderobe von Fusseln, Flusen Haaren u. dgl. zu reinigen.

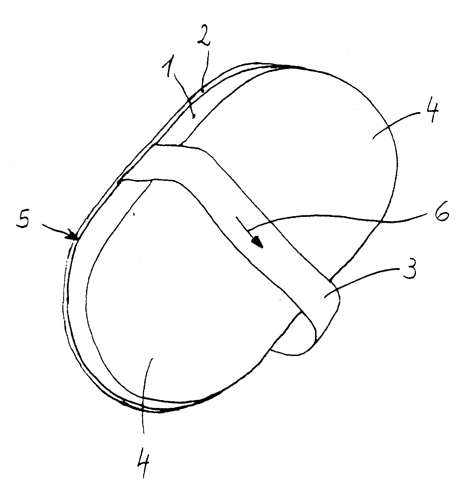

Die Neuerung wird nachfolgend anhand eines Ausführungsbeispieles näher erläutert. Der in der Zeichnung dargestellte Striegel hat eine Platte 1, an deren Unterseite 5 eine Striegelauflage 2 vorgesehen und an der ein Gurt 3 angebracht ist. Der Gurt 3 umgibt die Oberseite 4 der Platte 1 mit Abstand. Die Platte 1 besteht aus weichem, biegsamen, elastischen Material, im dargestellten Ausführungsbeispiel aus Moosschaum mit einer Stärke von 8 mm.

Als Striegelauflage ist ein Bürstenvelours 2 vorgesehen, dessen Bürstrichtung bzw. Arbeitsrichtung in Richtung des Striegelns weist. Der Bürstenvelours 2 ist mit der Platte 1 an deren Unterseite 5 verklebt.

Der Gurt 3 ist an beiden Längsseiten des Striegels zwischen der Platte 1 und dem Bürstenvelours 2 eingelassen und hier verklebt. Auf dem Gurt 3, der im dargestellten Ausführungsbeispiel aus Leinen besteht, ist ein Pfeil 6 angebracht, der in Bürstrichtung bzw. Arbeitsrichtung des Bürstenvelours 2 weist und somit die Richtung des Striegelns angibt.

Der Striegel kann abweichend von der in der Zeichnung dargestellten Form auch rechteckig sein. Ein rechteckiger Striegel ist insbesondere beim Reinigen von Polstern, Polstermöbeln, Autopolstern u. dgl. vorteilhaft, weil man mit einem rechteckigen Striegel auch die Ecken bei Polstermöbeln erreicht.

## Patentansprüche

1. Striegel, bestehend aus einer Platte (1) aus einem weichen, biegsamen und elastischen Material, einem Gurt (3) und einer auf der Unterseite der Platte (1) befestigten Striegelauflage (2), wobei der Gurt (3) an den beiden Längsseiten der Platte (1) zwischen der Platte (1) und der Striegelauflage (2) eingelassen und befestigt ist, dadurch gekennzeichnet, daß die Platte (1) 6 bis 10 mm dick ist und die Striegelauflage (2) aus Bürstenvelours besteht, dessen Bürst- bzw. Arbeitsrichtung auf eine Längsseite der Platte (1) weist.

2. Striegel nach Anspruch 1, dadurch gekennzeichnet, daß die Platte (1) aus einem Schaumstoff insbesondere aus Moosschaum besteht.

3. Striegel nach Anspruch 1, dadurch gekennzeichnet, daß die Platte (1) aus Filz oder Gummi besteht.

4. Striegel nach einem der vorhergehenden Ansprüche, dadurch gekennzeichnet, daß der Bürstenvelours mit der Platte (1) verklebt oder verschweißt ist.

5. Striegel nach einem der vorhergehenden Ansprüche, dadurch gekennzeichnet, daß der Gurt (3) an den beiden Längsseiten der Platte (1) zwischen dieser und dem Bürstenvelours eingelassen und verklebt, verschweißt, genäht oder genietet ist.

## Claims

1. Curry-comb, consisting of a soft, flexible and elastic block (1), a girth (3) which is fitted and affixed on the two long sides of the block (1) right between the 6 to 10mm thick block (1) and a combing underlay (2) consisting of a velvet-like texture with the direction of use leading towards one long side of the block (1).

2. Curry-comb according to claims No.1, characterized by a block (1) of foam material, in particular floral foam.

3. Curry-comb according to claims No.1, characterized by a block (1) of felt or rubber material.

4. Curry-comb according to one of the preceding claims, characterized by the fact that the combing underlay is fused with the block (1) by adhesion or welding.

5. Curry-comb according to one of the preceding claims, characterized by the fact that the girth (3) is fitted on the two long sides of the block between the block (1) and the combing underlay and is affixed there by adhesion, welding, sewing or riveting.

## Revendications

1. Brosse, faite d'une semelle (1) en un matériau souple, flexible et élastique, d'une courroie (3) et d'un revêtement de brossage (2), fixée sur la face inférieure de la semelle (1). La courroie (3) est coincée et fixée sur les deux longueurs de la semelle (1) entre la semelle (1) et le revêtement (2). Cette brosse présente la caractéristique d'avoir une semelle(1), épaisse de 6 a 10 mm, et que son revêtement est de velours dont le sens du brossage est perpendiculaire au plus grand coté.

2. La brosse, conformément à revendication 1, présente la caractéristique d'avoir une semelle (1) en mousse.

3. La brosse, conformément à revendication 1, présente la caractéristique d'avoir une semelle en feutre ou en caoutchouc.

4. La brosse, conformément à une des revendications précédentes, présente la caractéristique que le revêtement de brossage, un velours, est collé ou sondé a la semelle.

5. La brosse, conformément à une des revendications précédentes, présente la caractéristique que la courroie (3) est coincée sur les deux longueurs de la semelle (1), entre celle-ci et le velours, puis collée, sondée, consue ou rivetée.
